# EUROPÄISCHE PATENTSCHRIFT

(11) **EP 0 823 300 B1**
(45) Veröffentlichungstag und Bekanntmachung des Hinweises auf die Patenterteilung: **23.06.1999**
(21) Anmeldenummer: 97111575.3
(22) Anmeldetag: 09.07.1997
(51) Int. Cl.: B23B 27/06, B23B 51/04, B23C 5/20

(54) **Fräsplatte für Fräswerkzeuge**
Milling insert for milling tools
Plaquette de fraisage pour fraises

(30) Priorität: 05.08.1996 DE 19631578
(43) Veröffentlichungstag der Anmeldung: 11.02.1998
(73) Patentinhaber: ZETTL GMBH CNC PRÄZISIONS- UND SONDERWERKZEUGE, 87488 Betzigau (DE)
(72) Erfinder: Nespeta, Horst, Dr., 73492 Rainau/Buch (DE); Pfob, Franz, 87463 Probstried (DE)
(74) Vertreter: Hübner, Hans-Joachim, Dipl.-Ing.

(56) Entgegenhaltungen:
- EP-A- 0 145 167
- EP-A- 0 361 031
- EP-A- 0 392 730
- DE-A- 3 618 574
- DE-A- 3 807 900

## Beschreibung

Die Erfindung betrifft eine Fräsplatte mit den Merkmalen des Oberbegriffes von Patentanspruch 1.

Die EP-A-0392730 zeigt eine derartige Wendeschneidplatte in herkömmlicher Form mit gerader Schneidkante. Die Wendeplatte ist unter einem Winkel zur Schaftachse angestellt. Das Ergebnis ist ein Werkzeug, bei dem sich der Spanwinkel und der Freiwinkel über die Länge der Schneidkante ständig verändern. Da dies nachteilig ist, wird hier vorgeschlagen die Spanfläche und die Freifläche gekrümmt auszuführen, um zu erreichen, daß Freiwinkel und Spanwinkel über die Länge der Schneidkante im wesentlichen unverändert konstant bleiben. Nicht weiter beschrieben und gezeigt sind in diesem Dokument die Verläufe der Spanleitnut und der Freifläche. Die Anwendung des vorgeschlagenen Schneidkantenverlaufs auf Fräsplatten mit einer Spanfläche könnte in der Draufsicht elliptischen Bögen für die die Spanfläche begrenzenden Kanten führen, die Divergenz dieser Bögen würde dann aber zur Stirnfläche hin verlaufen, denn die Fräsplatte ist mit einer solchen Neigung zur Schaftachse eingebaut daß der stirnseitige Bereich der Schneidkante dem der Antriebsseite zugewandten Ende der Schneidkante voreilt. Das führt zu dem Nachteil, daß die Schaftdicke unter dem Boden der Schneidplatte geschwächt wird.

Die DE-A-36 18 574 zeigt eine Wendeschneidplatte, deren Deckfläche doppelt gekrümmt ist, nämlich eine kombinierte Konvex-Konkav-Krümmung aufweist. Der Spanwinkel soll längs der Schneidkante konstant und positiv sein . Der axiale Spanflächenwinkel, also der Winkel, mit der die Schneidkante zur Drehachse des Schaftes geneigt ist, ist so gewählt, daß das Stirnflächenende der Schneidkante voreilt. Die Doppelkrümmung der Spanfläche hat zur Folge, daß die Austrittskante in den Bereich der zweiten Hauptschneidkante fällt, was bedeutet, daß diese beiden Kanten in der Draufsicht auf die Fräsplatte nicht von der Stirnfläche weg divergieren. Bei Fräsplatten für kleine Schaftdurchmesser ist die Stabilität des Werkzeuges problematisch, weil der Schaft im Bereich der Plattenauflage stark geschwächt ist.

Aufgabe der Erfindung ist es, eine neue Fräsplatte zu schaffen, die ein weiches Schneidverhalten und eine hohe Laufruhe ergibt, bei einem weichen Anschnitt einen geringen Schnittdruck erzeugt und eine Anordnung am Schaft ermöglicht, die diesem im Bereich der Plattenauflage eine höhere Stabilität verleiht.

Diese Aufgabe wird erfindungsgemäß durch die Merkmale des Patentanspruches 1 gelöst.

Die erfindungsgemäß ausgebildete Fräsplatte ermöglicht ihre Schräganordnung zur Schaftachse, derart, daß die Materialstärke des Schaftes im Bereich der Plattenauflage zur Antriebsseite des Schaftes hin zunimmt. Dadurch wird entscheidend an Stabilität gewonnen, was den Einsatz solcher Fräsplatten bei sehr kleinen Schaftdurchmessern überhaupt erst möglich macht. Aufgrund der Schrägstellung der Fräsplatte wird ein weicher Anschnitt erreicht, da die Schneidkantenabschnitte nacheinander in das Werkstück eintreten. Die neue Fräsplatte ergibt ein weiches Schneidverhalten bei äußerster Laufruhe und aufgrund des geringeren Schnittdruckes werden auch höhere Genauigkeiten beim Fräsen erreicht. Die neue Fräsplatte hat einen extrem großen Keilwinkel, dessen Lage sich - auf die Fräsplatte selbst bezogen - über die Kantenlänge stetig verändert. Der Winkel zwischen Breitseitenfläche und Freifläche ändert sich zwar stetig über die Kantenlänge, durch Schrägeinbau der Platte wird diese Änderung aber kompensiert.

In ähnlicher Weise verbreitert sich zwar die Spanleitnut, wenn die Platte allein betrachtet wird, im montierten Zustand am Schaft wird jedoch drehachsbezogen eine konstant breite Spanleitnut erzielt, mit dem Resultat, daß auch der Spanwinkel konstant bleibt.

Eine Weiterbildung der Erfindung besteht darin, daß die, an die Schneidkante anschließende Seitenfläche wenigstens angenähert eine Schraubenfläche bildet, oder von dieser eingehüllt wird. Die Freifläche bildet dabei keine exakte Schraubenfläche im geometrischen Sinn, sondern stellt eine, sowohl längs der Schneidkante als auch quer dazu gewölbte Fläche dar, die im montierten Zustand am Schaft gegenüber einer Zylinderfläche um den Freiwinkel angestellt ist.

Eine besonders vorteilhafte Weiterbildung der Erfindung besteht darin, daß die Schneidkante ein mehrzahniges Gewindeschneidprofil aufweist, dessen Zähne an der Freifläche angeordnet sind und deren Zahnkanten - in Richtung auf die Schmalseitenfläche gesehen - wenigstens angenähert geradlinig und parallel zueinander unter einem spitzen Winkel zur Breitseitenfläche verlaufen, dessen 90°-Komplementwinkel gleich dem Winkel zwischen der Breitseitenfläche und der Achse des imaginären Rotationskörpers ist. Dieser kann als Zylinder oder als Kegel ausgebildet sein. Bei dieser Gewindefräsplatte kommen die längere Standzeit durch weichen Anschnitt und die höhere Genauigkeit des gefertigten Gewindes durch den verringerten Schnittdruck als Vorteile besonders deutlich zum Tragen. Durch den extrem großen Keilwinkel werden stabilere Schneidkanten erreicht. Die Fräsplatten können mehrschneidig und mehrreihig ausgebildet bzw. angeordnet sein.

Auch besteht noch eine Weiterbildung der Erfindung darin, daß an die Schmalseitenfläche wenigstens angenähert rechtwinklig eine schmalseitige Stirnfläche anschließt, deren, mit der Breitseitenfläche gemeinsam gebildete Kante eine weitere Schneidkante als Stirnschneidkante bildet, an die sich in der Breitseitenfläche eine weitere Spanleitnut anschließt. Mit diesem Fräswerkzeug kann z.B. in einem ersten Arbeitsgang zirkular gebohrt und anschließend in der Bohrung ein Gewinde eingefräst werden.

Die Erfindung betrifft weiterhin ein Fräswerkzeug mit der neuen Fräsplatte, die in einer Ausnehmung eines rotationssymmetrischen Schaftes lösbar befestigt ist, wobei die Ausnehmung eine Bodenfläche aufweist, auf der sich die Fräsplatte mit ihrer zweiten Breitseitenfläche abstützt, wobei die erste, die Schneidkante enthaltende Breitseitenfläche mit der Achse des Schaftes einen spitzen Winkel bildet, der im Bereich von 5° und 30° liegt. Vorzugsweise weist die Bodenfläche der Ausnehmung diesen spitzen Winkel auf und die beiden Breitseitenflächen der Fräsplatte verlaufen wenigstens angenähert parallel. Eine Alternative zu dieser bevorzugten Ausführung liegt darin, die Bodenfläche der Ausnehmung achsparallel anzuordnen. Die Fräsplatte muß dann keilförmig gestaltet sein, um die, die Schneidkante bzw. Schneidkanten enthaltende Breitseitenfläche unter dem genannten spitzen Winkel anzuordnen. Die Stirnschneidkante wird dabei von der Achse des Schaftes durchsetzt.

Anhand der Zeichnung, die ein Ausführungsbeispiel darstellt, wird die Erfindung näher beschrieben. Es zeigt:
- FIG.1: eine Seitenansicht eines Fräswerkzeuges mit Schaft und Fräsplatte,
- FIG.2: eine Draufsicht auf das Fräswerkzeug,
- FIG.3: eine Stirnansicht des Fräswerkzeuges nach Figuren 1 und 2,
- FIG.4: eine Seitenansicht des Fräswerkzeuges ähnlich FIG. 1, jedoch mit einer abgewandelten Ausführungsform der Fräsplatte und
- FIG.5: eine dreidimensionale Ansicht der Fräsplatte.

Ein Fräswerkzeug 10 besteht aus einem zylindrischen Schaft 12, der an seinem stirnseitigen Ende eine Ausnehmung 14 aufweist, deren Stützfläche 16 einen spitzen Winkel a mit der Schaftachse 18 bildet. Auf dieser Stützfläche 16 ist eine Fräsplatte 20 abgestützt, die mittels einer, ein Loch der Fräsplatte 20 durchsetzenden Schraube 22 festgeschraubt ist. Der Winkel a beträgt im Ausführungsbeispiel 15°.

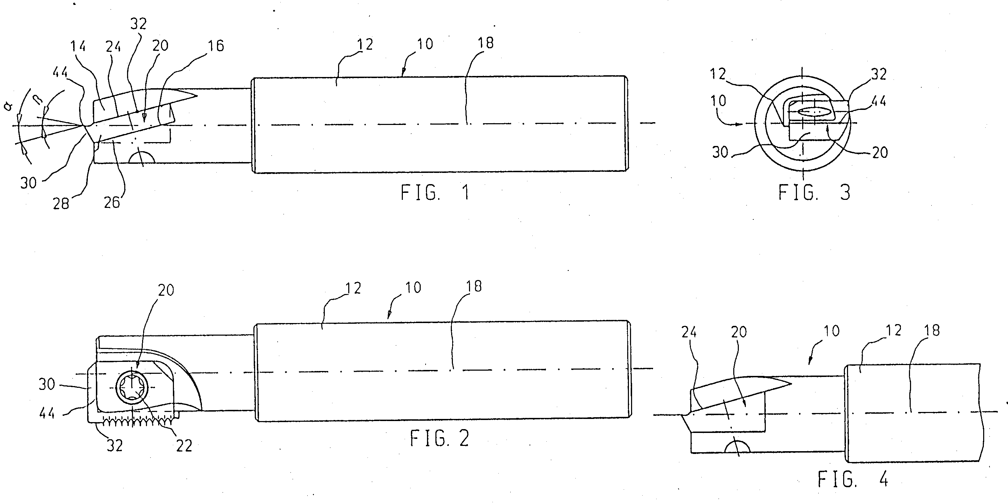

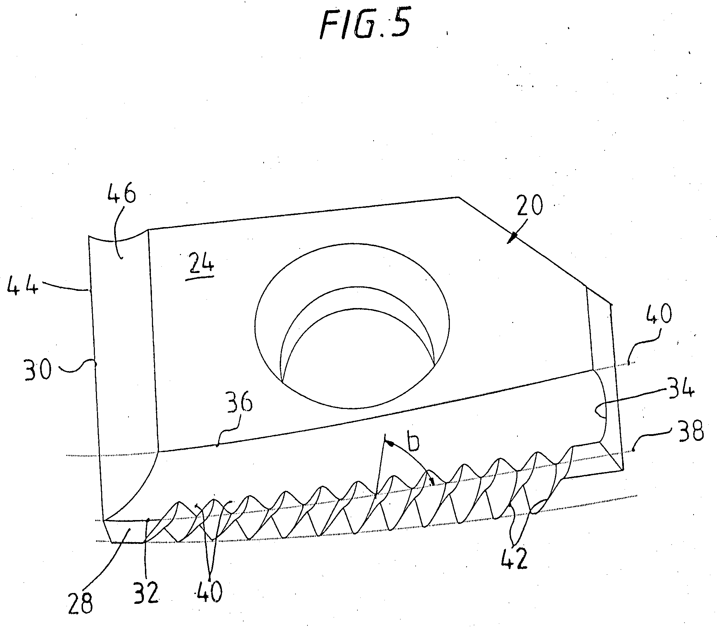

Die Fräsplatte 20 hat die Form eines Prismas u.a. mit einer Deckfläche 24, einer dazu parallelen Bodenfläche 26 (FIG.1) einer in Längsrichtung der Fräsplatte 20 verlaufenden Schmalseitenfläche 28 und einer vorderen Stirnfläche 30. Die Deckfläche 24 und die Bodenfläche 28 schneiden sich in einer Schneidkante 32, die in FIG. 5 punktiert dargestellt ist und die Zahnspitzen eines Gewindeschneidprofils enthält. Anstelle des Zahnprofils kann die Schneidkante 32 auch aus einer durchgehenden Schneide bestehen. Angrenzend an die Schneidkante 32 weist die Fräsplatte 20 in der Deckfläche 24 eine Spanleitnut 34 auf, die mit der Deckfläche 24 eine Spanaustrittskante 36 bildet. Die Spanleitnut 34 ist im Querschnitt konkav gewölbt und bildet mit der Normalen zur Schnittfläche des Werkstückes den Spanwinkel. Die Schneidkante 32 und die Spanaustrittskante 36 liegen in der Draufsicht auf die Fräsplatte 20 auf Ellipsenbögen 38 bzw. 40. Die Breite der Spannut 34 vergrößert sich vom stirnseitigen Ende der Fräsplatte 20 zu deren schaftseitigem Ende hin stetig, so daß die beiden Ellipsenbögen 38, 40 in dieser Richtung divergieren. In der Seitenansicht gemäß FIG. 1 verläuft die Spanaustrittskante 36 geradlinig, während die Schneidkante 32 zwar nahezu, jedoch nicht exakt geradlinig, sondern leicht konvex gekrümmt verläuft, wobei die Schneidkante 32 am stirnseitigen Ende der Fräsplatte 20 geringfügig unter der Ebene der Deckfläche 24 liegt. Damit läßt sich definieren, daß die Schneidkante 32 wenigstens angenähert auf einer schraubenförmigen Bahn um die Achse 18 des Schaftes 12 verläuft.

Zur Herstellung der Schneidenausbildung der Fräsplatte 20 wird diese am Schaft 12 in der vorgegebenen Schräglage von beispielsweise 15° befestigt. Das Werkzeug 10 wird in einer Bearbeitungsvorrichtung eingespannt, in der das Werkzeug längsverschiebbar und um die Werkzeugachse drehbar ist, wobei ein Getriebe dafür sorgt, daß das Werkzeug auf einer schraubenförmigen Bahn an einer Schleifscheibe entlang bewegt wird. Bei einem Schneidkantendurchmesser von 16 mm und einem Fräsplattenwinkel a = 15° wird in der Vorrichtung eine Ganghöhe von 160 mm eingestellt. Mit dieser Einstellung wird das Werkzeug mehrmals an der rotierenden Schleifscheibe vor- und zurückgefahren, wobei diese jeweils um einen bestimmten Hub auf die Fräsplatte zugestellt wird, um die gewünschte Tiefe der Spannut 34 zu erreichen.

Anschließend wird in derselben Aufspannung des Werkzeuges die Schmalseitenfläche 28 geschliffen, wozu das Werkzeug mit der vorgegebenen Steigung schraubenförmig hin- und herbewegt wird und die Schleifscheibe schrittweise zugestellt wird. Das Ergebnis ist eine schraubenflächenförmige Schmalseitenfläche 28.

Diese beiden Schleifvorgänge können mit derselben Schleifscheibe gleichzeitig ausgeführt werden, wenn diese entsprechend profiliert ist.

Als nächstes wird das Gewindeprofil in die Schmalseitenfläche 28 eingeschliffen. Dazu wird das Werkzeug in derselben Aufspannung einer entsprechend mit Zahnprofilierung versehenen Scheibe zugeführt. Diese Scheibe ist 2° konisch, womit beim Drehen des Werkzeuges ein entsprechender Freiwinkel am Schneidprofil erzeugt wird. Umgekehrt müßte bei Verwendung einer zylindrischen Scheibe ein entsprechender Anstellwinkel des Zahnprofils bezogen auf die Schleifscheibe eingestellt werden, wobei die beiden Flankenwinkel der Zähne unterschiedlich sind. Es versteht sich, daß beim Schleifen des Gewindeprofils keine Axialbewegung des Werkzeuges stattfindet. In der Seitenansicht der Fräsplatte 20, also auf die Schmalseitenfläche 28 gesehen, verlaufen die Kanten 42 der Zähne 40 geradlinig und parallel zueinander unter einem Winkel von 75° zur Breitseitenfläche. Dieser Winkel ist in FIG. 5 mit b bezeichnet und stellt den 90°-Komplementwinkel zum Anstellwinkel a der Fräsplatte 20 zur Schaftachse 18 dar. Die Zahnkanten 42 liegen - abgesehen von ihrem Freiwinkel - auf einer schraubenförmig gewundenen Fläche, die der vorher geschliffenen Schmalseitenfläche 28 entspricht.

Die Fräsplatte 20 weist zusätzlich stirnseitig eine Stirnschneidkante 44 auf, an die sich in der Breitseitenfläche 24 eine Spanleitnut 46 anschließt. Die Schneidkante 44 und die Spanaustrittskante der Spanleitnut 46 verlaufen geradlinig und parallel. Der in FIG. 1 angedeutete Spanwinkel β beträgt 11°. Die beiden Schneidkanten 32, 44 bilden einen Winkel von etwas weniger als 90° miteinander.

Die so beschriebene Fräsplatte 20 dient zum Bohrfräsen eines Loches, wobei im Rücklauf der Maschinenspindel mit derselben Fräsplatte ein Gewinde in das Loch eingeschnitten werden kann.

Wie sich aus FIG. 1 ergibt, liegt die Stirnschneidkante 44 in Höhe der Achse 18 des Schaftes 12, wird also von dieser durchsetzt. Der Schaft ist am stirnseitigen Ende der Plattenauflage geschwächt, jedoch nimmt diese Schwächung dank der Schrägstellung der Fräsplatte 20 schnell ab, so daß am schaftseitigen Ende der Fräsplatte mehr als der halbe Schaftquerschnitt zur Aufnahme des Schnittdruckes zur Verfügung steht.

Die Fräsplatte 20 kann mit zwei einander jeweils gegenüber liegenden Gewindeschneidprofilen und Stirnschneiden ausgestattet sein, um sie als Wendeplatte zu verwenden.

## Patentansprüche

1. Fräsplatte zur lösbaren Befestigung an einem Schaft (12) eines Fräswerkzeuges (10), die zwei wenigstens angenähert ebene Breitseitenflächen (24, 26), nämlich eine Deckfläche (24) und eine Bodenfläche (26) und mehrere Schmalseitenflächen (28, 30) aufweist, die letztere eine vordere Stirnfläche (30), eine von dieser abgewandte hintere Stirnfläche sowie mindestens eine Seitenfläche (28) umfassen, wobei mindestens eine Kante zwischen einer Deckfläche (24) und Seitenfläche (28) als Schneidkante (32) ausgebildet ist, an die sich in der angrenzenden Deckfläche (24) eine Spanleitnut (34) anschließt, die mit der Deckfläche (24) eine Spanaustrittskante (40) bildet, wobei die Schneidkante (32) auf einer wenigstens angenähert schraubenförmigen Bahn eines imaginären Rotationskörpers liegt, dessen Achse (18) mit der Ebene der Deckfläche (24) einen spitzen Winkel (a) im Bereich von 5° - 30° bildet, **dadurch gekennzeichnet, daß** die Schneidkante (32) und die Spanaustrittskante (40) - in der Draufsicht auf die Deckfläche (24) - wenigstens angenähert auf Ellipsenbögen (38, 40) liegen, die in dieser Draufsicht von der vorderen Stirnfläche (30) zur hinteren Stirnfläche hin divergieren, und daß sich der, zwischen Seitenfläche (28) und Deckfläche (24) gebildete Winkel längs der Schneidkante (32) in Richtung der sich verbreiternden Spanleitnut (34) stetig vergrößert.

2. Fräsplatte nach Anspruch 1, **dadurch gekennzeichnet, daß** die an die Schneidkante (32) anschließende Seitenfläche (28) wenigstens angenähert eine Schraubenfläche bildet oder von dieser eingehüllt wird.

3. Fräsplatte nach Anspruch 1 oder 2, **dadurch gekennzeichnet, daß** die Schneidkante (32) ein mehrzahniges Gewindeschneidprofil aufweist, dessen Zähne (40) von der durch die Seitenfläche (28) gebildeten Freifläche eingehüllt sind, wobei die Zahnkanten (42) - in Richtung auf die Seitenfläche (28) gesehen - wenigstens angenähert geradlinig und parallel zueinander unter einem spitzen Winkel zur Deckfläche (24) verlaufen, dessen 90°-Komplementwinkel gleich dem Winkel (a) zwischen der Deckfläche (24) und der Achse (18) des imaginären Rotationskörpers ist.

4. Fräsplatte nach einem der Ansprüche 1 bis 3, **dadurch gekennzeichnet, daß** der Rotationskörper ein Kreiszylinder ist.

5. Fräsplatte nach einem der Ansprüche 1 bis 3, **dadurch gekennzeichnet, daß** der Rotationskörper ein Kegel ist.

6. Fräsplatte nach einem der Ansprüche 1 bis 5, **dadurch gekennzeichnet, daß** die zwischen Deckfläche (24) und vorderer Stirnfläche (30) gebildete Kante als eine weitere Schneidkante (44) ausgebildet ist, an die sich in der Deckfläche (24) eine weitere Spanleitnut (46) anschließt.

7. Fräswerkzeug mit einer Fräsplatte nach einem der Ansprüche 1 bis 6, **dadurch gekennzeichnet, daß** die Fräsplatte (20) in einer Ausnehmung (14) eines rotationssymmetrischen Schaftes (12) lösbar befestigt ist, wobei die Ausnehmung (14) eine Stützfläche (16) aufweist, auf der sich die Fräsplatte (20) mit ihrer Boden-fläche (26) abstützt, daß die Deckfläche (24) mit der Achse (18) des Schaftes (12) einen spitzen Winkel (a) bildet, der im Bereich von 5° und 30° liegt und daß die unterhalb der Stützfläche (16) der Ausnehmung (14) vorhandene Schaftdicke zur Antriebsseite des Schaftes hin zunimmt.

8. Fräswerkzeug nach Anspruch 7, **dadurch gekennzeichnet, daß** die Bodenfläche (16) der Ausnehmung (14) den spitzen Winkel (a) im Bereich von 5° und 30° mit der Achse (18) des Schaftes bildet, und daß die beiden Breitseitenflächen (24, 26) der Fräsplatte (20) wenigstens angenähert parallel verlaufen.

9. Fräswerkzeug nach Anspruch 7 oder 8, **dadurch gekennzeichnet, daß** die zweite Schneidkante (44) von der Achse (18) des Schaftes (12) durchsetzt wird.

## Claims

1. A milling plate for detachable fastening to a shaft (12) of a milling tool (10), comprising two at least substantially flat broad-side faces (24, 26), namely a top face (24) and a bottom face (26) and a plurality of narrow-side faces (28, 30), the latter comprising a front end face (30), a rear end face remote therefrom and at least one side face (28), wherein at least one edge between a top face (24) and a side face (28) is formed as a cutting edge (32) adjoined by a cutting guide groove (34) in the adjacent top face (24), the said cutting guide groove (34) forming a cutting exit edge (40) with the top face (24), wherein the cutting edge (32) rests on an at least substantially helical path of an imaginary body of rotation, the axis (18) of which forms an acute angle (**a**) in the range of from 5° to 30° with the plane of the top face (24), **characterized in that** the cutting edge (32) and the cutting exit edge (40) are situated as seen in the plan view of the top face (24) - at least substantially on elliptical arcs (38, 40) diverging from the front end face (30) towards the rear end face in the said plan view, and the angle formed between the side face (28) and the top face (24) increases continuously along the cutting edge (32) in the direction of the widening cutting guide groove (34).

2. A milling plate according to Claim 1, **characterized in that** the side face (28) adjoining the cutting edge (32) forms at least substantially a helical face or is enclosed thereby.

3. A milling plate according to Claim 1 or 2, **characterized in that** the cutting edge (32) has a multiple-tooth thread-cutting profile, the teeth (40) of which are enclosed by the free face formed by the side face (28), wherein the tooth edges (42) - as seen in the direction towards the side face (28) - extend at least substantially in straight lines and parallel to one another at an acute angle to the top face (24), the 90°-complementary angle of the said acute angle being equal to the angle (**a**) between the top face (24) and the axis (18) of the imaginary body of rotation.

4. A milling plate according to one of Claims 1 to 3, **characterized in that** the body of rotation is a regular cylinder.

5. A milling plate according to one of Claims 1 to 3, **characterized in that** the body of rotation is a cone.

6. A milling plate according to one of Claims 1 to 5, **characterized in that** the edge formed between the top face (24) and the front end face (30) is formed as a further cutting edge (44) adjoined by a further cutting guide groove (46) in the top face (24).

7. A milling tool with a milling plate according to one of Claims 1 to 6, **characterized in that** the milling plate (20) is detachably fastened in a recess (14) in a rotationally symmetrical shaft (12), wherein the recess (14) has a support face (16) on which the milling plate (20) is supported by the bottom face (26) thereof, the top face (24) forms an acute angle (**a**) in the range of from 5° to 30° with the axis (18) of the shaft (12), and the thickness of the shaft present below the support face (16) of the recess (14) increases towards the driving end of the shaft.

8. A milling tool according to Claim 7, **characterized in that** the bottom face (26) of the recess (14) forms the acute angle (**a**) in the range of from 5° to 30° with the axis (18) of the shaft, and the two broad-side faces (24, 26) of the milling plate (20) extend at least substantially parallel.

9. A milling tool according to Claim 7 or 8, **characterized in that** the second cutting edge (44) is traversed by the axis (18) of the shaft (12).

## Revendications

1. Plaquette de fraisage destinée à être fixée de manière amovible sur le manche (12) d'une fraise (10) et présentant deux faces du côté large (24, 26) au moins environ planes, notamment une face supérieure (24) et une face inférieure (26), et plusieurs faces du côté étroit (28, 30), ces dernières comprenant une face frontale avant (30), une face frontale arrière orientée du côté opposé à cette dernière ainsi qu'au moins une face latérale (28), au moins une arête entre une face supérieure (24) et une face latérale (28) se présentant sous forme d'arête tranchante (32) qui est suivie, dans la face supérieure (24) adjacente, d'une rainure guide-copeaux (34) formant, avec la face supérieure (24), une arête de sortie de copeaux (40), l'arête tranchante (32) se situant sur une trajectoire au moins environ hélicoïdale d'un corps rotatif imaginaire dont l'axe (18) forme, avec le plan de la face supérieure (24), un angle aigu (a) de l'ordre de 5° à 30°, caractérisée par le fait que l'arête tranchante (32) et l'arête de sortie de copeaux (40) se situent - en vue en élévation de la face supérieure (24) - au moins environ sur des arcs d'ellipse (38, 40) qui, dans cette vue en élévation, divergent de la face frontale avant (30) vers la face frontale arrière et que l'angle formé entre la face latérale (28) et la face supérieure (24) augmente constamment, le long de l'arête tranchante (32), en direction de la rainure guide-copeaux (34) s'élargissant.

2. Plaquette de fraisage suivant la revendication 1, caractérisée par le fait que la face latérale (28) aboutant à l'arête tranchante (32) constitue au moins environ une face hélicoïdale ou est enveloppée par cette dernière.

3. Plaquette de fraisage suivant la revendication 1 ou 2, caractérisée par le fait que l'arête tranchante (32) présente un profil de filetage à dents multiples dont les dents (40) sont enveloppées par la face libre formée par la face latérale (28), les arêtes de dent (42) - vues en direction de la face latérale (28) - s'étendant au moins environ en ligne droite et parallèles entre elles, suivant un angle pointu par rapport à la face supérieure (24) dont l'angle complémentaire pour former 90° est égal à l'angle (a) entre la face supérieure (24) et l'axe (18) du corps rotatif imaginaire.

4. Plaquette de fraisage suivant l'une des revendications 1 à 3, caractérisée par le fait que le corps rotatif imaginaire est un cylindre.

5. Plaquette de fraisage suivant l'une des revendications 1 à 3, caractérisée par le fait que le corps rotatif imaginaire est un cône.

6. Plaquette de fraisage suivant l'une des revendications 1 à 5, caractérisée par le fait que l'arête formée entre la face supérieure (24) et la face frontale avant (30) se présente sous forme d'une autre arête tranchante (44) qui est suivie, dans la face supérieure (24), une autre rainure guide-copeaux (46).

7. Fraise à plaquette de fraisage suivant l'une des revendications 1 à 6, caractérisée par le fait que la plaquette de fraisage est fixée de manière amovible dans un évidement (14) d'un manche (12) symétrique par rapport à l'axe de rotation, l'évidement (14) présentant une surface d'appui (16) sur laquelle la plaquette de fraisage (20) s'appuie par sa face inférieure (26), que la face supérieure (24) forme, avec l'axe (18) du manche (12), un angle aigu (a) de l'ordre de 5° à 30° et que l'épaisseur de manche présente sous la surface d'appui (16) de l'évidement (14) augmente vers le côté de l'entraînement du manche.

8. Fraise suivant la revendication 7, caractérisée par le fait que la face inférieure (16) de l'évidement (14) forme l'angle aigu (a) de l'ordre de 5° à 30° avec l'axe (18) du manche, et que les deux faces du côté large (24, 26) de la plaquette de fraisage (20) s'étendent au moins environ parallèles entre elles.

9. Fraise suivant la revendication 7 ou 8, caractérisée par le fait que la seconde arête tranchante (44) est traversée par l'axe (18) du manche (12).
